(19) Europäisches Patentamt
European Patent Office
Office européen des brevets

(11) EP 0 745 624 B1

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(51) Int. Cl.6: **C08F 279/04**, C08F 279/02, C08L 55/02, C08L 51/04

(21) Anmeldenummer: **96108044.7**

(22) Anmeldetag: **21.05.1996**

(54) **ABS-Formmassen mit verbesserten Eigenschaften**
ABS moulding compositions with improved properties
Masses à mouler d'ABS à propriétés améliorées

(84) Benannte Vertragsstaaten:
**BE DE ES FR GB IT NL**

(30) Priorität: **02.06.1995 DE 19520286**

(43) Veröffentlichungstag der Anmeldung:
**04.12.1996 Patentblatt 1996/49**

(73) Patentinhaber: **BAYER AG**
**51368 Leverkusen (DE)**

(72) Erfinder:
- **Eichenauer, Herbert, Dr.**
  **41539 Dormagen (DE)**
- **Jansen, Ulrich, Dr.**
  **41541 Dormagen (DE)**
- **Piejko, Karl-Edwin, Dr.**
  **51467 Bergisch Gladbach (DE)**
- **Leitz, Edgar, Dr.**
  **41541 Dormagen (DE)**

(56) Entgegenhaltungen:
**EP-A- 0 678 531** **GB-A- 1 139 588**
**US-A- 3 170 964**

- **DATABASE WPI Section Ch, Week 7947 Derwent Publications Ltd., London, GB; Class A18, AN 79-85317B XP002014099 & JP-A-54 133 588 (JAPAN SYNTHETIC RUBBER) , 17.Oktober 1979**
- **DATABASE WPI Section Ch, Derwent Publications Ltd., London, GB; Class A13, AN 70-33703R XP002014100 & DD-A-71 615 (SCHNABEL H HAMANN B GRUNO)**

EP 0 745 624 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Xerox (UK) Business Services
2.16.7/3.6

## Beschreibung

Die Erfindung betrifft in Emulsion hergestellte thermoplastische Formmassen vom ABS-Typ mit gegenüber bekannten ABS-Formmassen verbesserten Eigenschaften, insbesondere einer Kombination aus hoher Zähigkeit, guter Verarbeitbarkeit und sehr guter Oberflächenqualität (Glanz, Farbeindruck).

ABS-Formmassen sind Zweiphasenkunststoffe aus:

I. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

II. mindestens einem Pfropfpolymerisat, welches hergestellt worden ist durch Pfropfreaktion eines oder mehrerer der unter I. genannten Monomeren auf Butadien-Homo- oder Copolymerisat ("Pfropfgrundlage"). Dieses Pfropfpolymerisat ("Elastomerphase" oder "Pfropfkautschuk") bildet die disperse Phase im Matrixharz.

Bei gleicher Matrix wird die Zähigkeit einer ABS-Formmasse im wesentlichen durch den Pfropfkautschuk bestimmt. Die mit üblichen ABS-Formmassen erreichbare Zähigkeit reicht jedoch für stark beanspruchte Formteile noch nicht immer mit der notwendigen Sicherheit aus oder aber werden hohe Zähigkeitswerte auf Kosten anderer Eigenschaften wie z.B. Oberflächenqualität der Formteile erzielt.

Es besteht daher Bedarf an Pfropfkautschuken, auf deren Basis ABS-Formmassen mit erhöhter Zähigkeit hergestellt werden können, ohne daß sich die übrigen Eigenschaften, insbesondere Glanz und Gleichmäßigkeit des Farbeindruckes (keine Farbvertiefung hinter Rippen bei eingefärbten Formteilen mit Rippenstrukturen, d.h. kein optischer Eindruck einer ungleichmäßigen Einfärbung) verschlechtern.

Es wurde nun gefunden, daß bei der Verwendung eines speziellen Gemisches mindestens zweier genau definierter Kautschuklatices und vorzugsweise durch die gleichzeitige Anwendung spezieller Reaktionsbedingungen bei der Pfropfkautschukherstellung ABS-Formmassen erhalten werden, die gleichzeitig hohe Werte für die Schlagzähigkeit und eine sehr gute Oberflächenqualität, insbesondere einen hohen Glanz und keine Farbvertiefung, aufweisen.

Die Verwendung von Kautschuklatex-Gemischen bei der Herstellung von Pfropfkautschuken für ABS-Formmassen ist zwar bekannt, die geforderte Qualität wird allerdings nicht erreicht.

So sind z.B. aus der DE-AS 1 813 719 zähe, gut verarbeitbare ABS-Formmassen bekannt, die erhalten werden durch einstufige, unter Druck ablaufende Emulsions-Pfropfpolymerisation von 75 bis 90 Gew.-Teilen eines Monomerengemisches auf 10 bis 25 Gew.-Teile eines Gemisches zweier Kautschuklatices, wovon einer ein reines Polybutadien und der andere ein SBR-Latex mit einem Styrolgehalt <50% und einer bestimmten Teilchengröße ist.

Die US-PS 3 509 238 beschreibt ABS-Produkte, die unter Verwendung zweier Pfropfpolymerisate hergestellt werden, von denen eines schwach, das andere stark gepfropft ist. Diese Produkte haben jedoch unzureichende Eigenschaften bei tiefen Temperaturen.

In der US-PS 3 928 494 sind ABS-Produkte mit zwei verschieden stark gepfropften Pfropfpolymerisaten beschrieben, bei denen das schwächer bepfropfte feinteilige Material sich bei Sprühtrocknung oder Koagulation zu Teilchenaggregaten zusammenlagert. Derartige Aggregate stellen locker gebundene Gebilde dar, die unter hohen Temperaturen und Scherkräften, wie sie beispielsweise bei der Spritzgußverarbeitung auftreten können, wieder auseinandergerissen werden und dann zu nicht ausreichenden Produktzähigkeiten führen.

In der EP-A 116 330 werden ABS-Formmassen auf Basis zweier unterschiedlicher Butadienpolymerisate mit einem speziellen Pfropfstellenabstand der aus den Butadienpolymerisaten hergestellten Pfropfpolymerisate beschrieben. Diese Produkte weisen zwar eine gute Zähigkeit bei Raumtemperatur auf, die Werte für Tieftemperaturzähigkeit und Oberflächenglanz sind jedoch für hohe Anforderungen nicht ausreichend.

Gegenstand der Erfindung sind thermoplastische Formmassen vom ABS-Typ enthaltend

I) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch α-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten, und wobei das Massenverhältnis von eingesetzten Monomeren zu eingesetzten Butadienpolymerisaten 25:75 bis 70:30 beträgt, und

II) mindestens einem Copolymerisat aus Styrol und Acrylnitril im Gewichtsverhältnis 90:10 bis 50:50, wobei das Styrol und/oder Acrylnitril ganz oder teilweise durch α-Methylstyrol oder Methylmethacrylat oder N-Phenylmaleinimid ersetzt werden kann,

dadurch gekennzeichnet, daß der Butadienpolymerisatlatex (A) einen Teilchendurchmesser $d_{50} \leq 320$ nm vorzugsweise 260 bis 310 nm, eine Breite der Teilchengrößenverteilung (gemessen als $d_{90}$-$d_{10}$ aus der integralen Teilchengrößenverteilung) von 30 bis 100 nm, vorzugsweise von 40 bis 80 nm, und einen Gelgehalt ≤70 Gew.-%, vorzugsweise 40 bis 65 Gew.-%, besitzt und der Butadienpolymerisatlatex (B) einen Teilchendurchmesser $d_{50} \geq 370$ nm, vorzugsweise 380 bis 450 nm, eine Breite der Teilchengrößenverteilung (gemessen als $d_{90}$-$d_{10}$ aus der integralen Teilchengrößenverteilung) von 50 bis 500 nm, vorzugsweise von 100 bis 400 nm, und einen Gelgehalt ≥70 Gew.-%, vorzugsweise 75 bis 90 Gew.-%, aufweist. Vorzugsweise erfolgt die Pfropfpolymerisation durch Monomerenzulauf zum Gemisch der Butadienpolymerisatlatices (A) und (B) in der Weise, daß innerhalb der ersten Hälfte der Monomerenzulaufzeit 55 bis 90 Gew.-%, vorzugsweise 60 bis 80 Gew.-% und besonders bevorzugt 65 bis 75 Gew.-% der Monomeren zudosiert werden.

Außerdem können die erfindungsgemäßen Formmassen weitere kautschukfreie, nicht aus Vinylmonomeren aufgebaute Thermoplastharze enthalten.

Bei der Pfropfpolymerisation wird ein Gemisch aus mindestens zwei Butadienpolymerisatlatices, je einen von Typ (A) und (B), eingesetzt. Das Gewichtsverhältnis (A):(B) beträgt, bezogen auf den jeweiligen Feststoffanteil der Latices, vorzugsweise 90:10 bis 10:90, besonders bevorzugt 60:40 bis 30:70.

Die Butadienpolymerisatlatices (A) und (B) können durch Emulsionspolymerisation von Butadien hergestellt werden. Diese Polymerisation ist bekannt und z.B. in Houben-Weyl, Methoden der Organischen Chemie, Makromolekulare Stoffe, Teil 1, S. 674 (1961), Thieme Verlag Stuttgart, beschrieben. Als Comonomere können bis zu 50 Gew.-% (bezogen auf die gesamte zur Butadienpolymerisatherstellung eingesetzte Monomerenmenge) eines oder mehrerer mit Butadien copolymerisierbarer Monomerer eingesetzt werden.

Beispiele für solche Monomere sind Isopren, Chloropren, Acrylnitril, Styrol, α-Methylstyrol, $C_1$-$C_4$-Alkylstyrole, $C_1$-$C_8$-Alkylacrylate, $C_1$-$C_8$-Alkylmethacrylate, Alkylenglycoldiacrylate, Alkylenglykoldimethacrylate, Divinylbenzol; vorzugsweise wird Butadien alleine eingesetzt. Es ist auch möglich, nach bekannten Methoden zunächst ein feinteiliges Butadienpolymerisat herzustellen und es anschließend in bekannter Weise zur Einstellung der erforderlichen Teilchengröße zu agglomerieren.

Einschlägige Techniken sind beschrieben (vergl. EP-PS 0 029 613; EP-PS 0 007 810; DD-PS 144 415 DE-AS 1 233 131; DE-AS 1 258 076; DE-OS 2 101 650; US-PS 1 379 391).

Ebenfalls kann nach der sogenannten Saatpolymerisationstechnik gearbeitet werden, bei der zunächst ein feinteiliges Butadienpolymerisat hergestellt und dann durch Weiterumsatz mit Butadien enthaltenden Monomeren zu größeren Teilchen weiterpolymerisiert wird.

Prinzipiell kann man die Butadienpolymerisatlatices (A) und (B) auch herstellen durch Emulgieren von feinteiligen Butadienpolymerisaten in wäßrigen Medien (vergl. japanische Patentanmeldung 55 125 102).

Der Butadienpolymerisatlatex (A) besitzt einen mittleren Teilchendurchmesser $d_{50} \leq 320$ nm, vorzugsweise 260 bis 310 nm, eine Breite der Teilchengrößenverteilung (gemessen als $d_{90}$-$d_{10}$ aus der integralen Teilchengrößenverteilung) von 30 bis 100 nm, vorzugsweise von 40 bis 80 nm, und einen Gelgehalt ≤ 70 Gew.-%, vorzugsweise 40 bis 65 Gew.-%.

Der Butadienpolymerisatlatex (B) besitzt einen mittleren Teilchendurchmesser $d_{50} \geq 370$ nm, vorzugsweise 380 bis 450 nm, eine Breite der Teilchengrößenverteilung (gemessen als $d_{90}$-$d_{10}$ aus der integralen Teilchengrößenverteilung) von 50 bis 500 nm, vorzugsweise von 100 bis 400 nm, und einen Gelgehalt ≥ 70 Gew.-%, vorzugsweise 75 bis 90 Gew.-%.

Die Bestimmung des mittleren Teilchendurchmesser $d_{50}$ sowie der $d_{10}$- und $d_{90}$-Werte kann durch Ultrazentrifugenmessung erfolgen (vgl. W. Scholtan, H. Lange: Kolloid Z. u. Z. Polymere 250, S. 782 bis 796 (1972)), die angegebenen Werte für den Gelgehalt beziehen sich auf die Bestimmung nach der Drahtkäfigmethode in Toluol (vgl. Houben-Weyl, Methoden der Organischen Chemie, Makromolekulare Stoffe, Teil 1, S. 307 (1961), Thieme Verlag Stuttgart).

Die Gelgehalte der Butadienpolymerisatlatices (A) und (B) können in prinzipiell bekannter Weise durch Anwendung geeigneter Reaktionsbedingungen eingestellt werden (z.B. hohe Reaktionstemperatur und/oder Polymerisation bis zu hohem Umsatz sowie gegebenenfalls Zusatz vernetzend wirkender Substanzen zur Erzielung eines hohen Gelgehaltes oder z.B. niedrige Reaktionstemperatur und/oder Abbruch der Polymerisationsreaktion vor Eintreten einer zu starken Vernetzung sowie gegebenenfalls Zusatz von Molekulargewichtsreglern wie beispielsweise n-Dodecylmercaptan oder t-Dodecylmercaptan zur Erzielung eines niedrigen Gelgehaltes). Als Emulgatoren können die üblichen anionischen Emulgatoren wie Alkylsulfate, Alkylsulfonate, Aralkylsulfonate, Seifen gesättigter oder ungesättigter Fettsäuren sowie alkalischer disproportionierter oder hydrierter Abietin-oder Tallölsäuren verwendet werden, vorzugsweise werden Emulgatoren mit Carboxylgruppen (z.B. Salze von $C_{10}$-$C_{18}$-Fettsäuren, disproportionierte Abietinsäure) eingesetzt.

Die Pfropfpolymerisation kann so durchgeführt werden, daß das Monomerengemisch kontinuierlich zu dem Gemisch der Butadienpolymerisatlatices (A) und (B) gegeben und polymerisiert wird.

Dabei werden bevorzugt spezielle Monomer: Kautschuk-Verhältnisse und eine definierte Vorgehensweise bei der Monomerzugabe zum Kautschuklatex eingehalten.

Zur Erzeugung der erfindungsgemäßen Produkte werden vorzugsweise 25 bis 70 Gew.-Teile, besonders bevorzugt 30 bis 60 Gew.-Teile, eines Gemisches aus Styrol und Acrylnitril, das gegebenenfalls bis zu 50 Gew.-% (bezogen auf Gesamtmenge der in der Pfropfpolymerisation eingesetzten Monomeren) eines oder mehrerer Comonomerer enthalten kann, in Gegenwart von vorzugsweise 30 bis 75 Gew.-Teilen, besonders bevorzugt 40 bis 70 Gew.-Teilen (jeweils bezogen auf Feststoff) des Butadienpolymerisatlatex-Gemisches aus (A) und (B) polymerisiert.

Die bei dieser Pfropfpolymerisation eingesetzten Monomeren sind vorzugsweise Mischungen aus Styrol und Acrylnitril im Gew.-Verhältnis 90:10 bis 50:50, besonders bevorzugt im Gew.-Verhältnis 65:35 bis 75:25, wobei Styrol und/oder Acrylnitril ganz oder teilweise durch copolymerisierbare Monomere, vorzugsweise durch α-Methylstyrol, Methylmethacrylat oder N-Phenylmaleinimid ersetzt werden können.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge in der Pfropfpolymerisationstufe).
Geeignete Molekulargewichtsregler sind beispielsweise n-Dodecylmercaptan, t-Dodecylmercaptan, dimeres α-Methylstyrol.

Als Initiatoren kommen anorganische und organische Peroxide, z.B. $H_2O_2$, Di-tert.-butylperoxid, Cumolhydroperoxid, Dicyclohexylpercarbonat, tert.-Butylhydroperoxid, p-Menthanhydroperoxid, Azoinitiatoren wie z.B. Azobisisobutyronitril, anorganische Persalze wie Ammonium-, Natrium-, oder Kaliumpersulfat, Kaliumperphosphat, Natriumperborat sowie Redox-Systeme in Betracht, die sich aus einem in der Regel organischen Oxidationsmittel und einem Reduktionsmittel zusammensetzen, wobei im Reaktionsmedium zusätzlich Schwermetallionen vorhanden sind (siehe H. Logemann in Houben-Weyl, Methoden der Organischen Chemie, Band 14/1, S. 263 bis 297).

Die Reaktionstemperatur ist 25°C bis 160°C, vorzugsweise 40°C bis 90°C. Als Emulgatoren können die obengenannten Verbindungen eingesetzt werden.

Zur Erzeugung der erfindungsgemäßen Produkte wird die Pfropfpolymerisation vorzugsweise durch Monomerenzulauf derart durchgeführt, daß innerhalb der ersten Hälfte der Gesamtmonomerzudosierzeit 55 bis 90 Gew.-%, vorzugsweise 60 bis 80 Gew.-% und besonders bevorzugt 65 bis 75 Gew.-% der gesamten bei der Pfropfpolymerisation einzusetzenden Monomeren zudosiert werden; der verbleibende Monomeranteil wird innerhalb der zweiten Hälfte der Gesamtmonomerzudosierzeit zudosiert.

Schließlich wird das so erzeugte Pfropfpolymerisat mit mindestens einem thermoplastischen Harz gemischt. Dies ist auf verschiedene Weise möglich. Wurde das Thermoplastharz selbst durch Emulsionspolymerisation erzeugt, so können die Latices gemischt und gemeinsam ausgefällt und aufgearbeitet werden. Wurde das Thermoplastharz durch Lösungs- oder Massepolymerisation hergestellt, so muß das Pfropfpolymerisat durch bekannte Verfahren, beispielsweise durch Sprühtrocknung oder durch Zusatz von Salzen und/oder Säuren, Waschen der Fällprodukte und Trocknung des Pulvers isoliert und danach mit dem vorzugsweise in Granulatform vorliegenden Thermoplastharz vermischt werden (vorzugsweise auf Mehrwalzenstühlen, Mischextrudern oder Innenknetern); diese Methode wird bevorzugt angewandt.

Als Vinylharze werden vorzugsweise Copolymerisate des Styrols und Acrylnitrils im Gewichtsverhältnis 90:10 bis 50:50 eingesetzt, wobei Styrol und/oder Acrylnitril ganz oder teilweise durch α-Methylstyrol und/oder Methylmethacrylat ersetzt sein kann; gegebenenfalls kann anteilmäßig bis zu 30 Gew.-%, bezogen auf Vinylharz, eines weiteren Monomeren aus der Reihe Maleinsäureanhydrid, Maleinsäureimid, N-(Cyclo)-Alkylmaleinimid, N-(Alkyl)-Phenylmaleinimid mitverwendet werden.

Einzelheiten zur Herstellung dieser Harze sind beispielsweise in der DE-AS 2 420 358 und der DE-AS 2 724 360 beschrieben. Durch Masse- bzw. Lösungspolymerisation hergestellte Vinylharze haben sich besonders bewährt.

Außer derartigen aus Vinylmonomeren aufgebauten Thermoplastharzen ist auch die Verwendung von z.B. aromatischen Polycarbonaten, aromatischen Polyestercarbonaten, Polyestern, Polyamiden als Harzkomponente in den erfindungsgemäßen Formmassen möglich.

Geeignete thermoplastische Polycarbonate bzw. Polyestercarbonate sind bekannt (vgl. z.B. DE-AS 1 495 626, DE-OS 2 232 877, DE-OS 2 703 376, DE-OS 2 714 544, DE-OS 3 000 610, DE-OS 3 832 396, DE-OS 3 077 934), z.B. herstellbar durch Umsetzung von Diphenolen der Formeln (I) und (II)

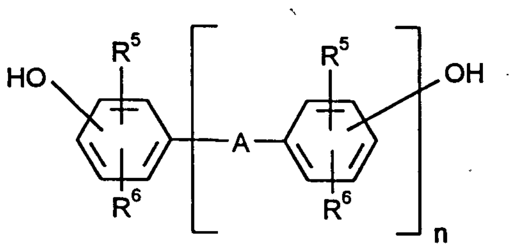

(I)

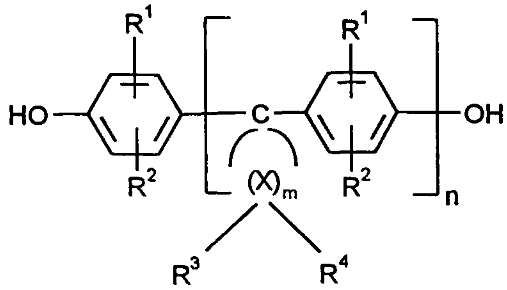

(II)

worin

A eine Einfachbindung, $C_1$-$C_5$-Alkylen, $C_2$-$C_5$-Alkyliden, $C_5$-$C_6$-Cycloalkyliden, -O-, -S-,-SO-, $-SO_2-$ oder -CO- ist,

$R^5$ und $R^6$ unabhängig voneinander für Wasserstoff, Methyl oder Halogen, insbesondere für Wasserstoff, Methyl, Chlor oder Brom stehen,

$R^1$ und $R^2$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$-Aralkyl, bevorzugt Phenyl-$C_1$-$C_4$alkyl, insbesondere Benzyl, bedeuten,

m eine ganze Zahl von 4 bis 7, bevorzugt 4 oder 5 ist,

n 0 oder 1 ist,

$R^3$ und $R^4$ für jedes X individuell wählbar sind und unabhängig voneinander Wasserstoff oder $C_1$-$C_6$-Alkyl bedeuten und

X Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren oder mit Phosgen nach dem Verfahren in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (I) und (II) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (I) sind 2,2-Bis-(4-hydroxyphenyl)-propan und 1,1-Bis-(4-hydroxyphenyl)-cyclohexan, bevorzugtes Phenol der Formel (II) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, das heißt, Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII, S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2 715 932).

Die Polyalkylenterephthalate können durch Einbau relativ kleiner Mengen 3-oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Aminomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbornen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Der Anteil des Pfropfkautschuks an den erfindungsgemäßen Formmassen läßt sich in weiten Grenzen variieren; vorzugsweise beträgt er 10 bis 80 Gew.-%, besonders bevorzugt 20 bis 75 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoffe (Glasfasern, Kohlefasern, etc.), Farbmittel.

Die Endverformung kann auf handelsüblichen Verarbeitungsaggregaten vorgenommen werden und umfaßt z.B. Spritzgießverarbeitung, Plattenextrusion mit gegebenenfalls anschließender Warmverformung, Kaltverformung, Extrusion von Rohren und Profilen, Kalander-Verarbeitung.

In den folgenden Beispielen sind die angegebenen Teile immer Gewichtsteile und die angegebenen % immer Gew.-%, wenn nicht anders angegeben.

## Beispiele

### Beispiel 1

8 Gew.-Teile (gerechnet als Feststoff) eines durch radikalische Polymerisation hergestellten anionisch emulgierten Polybutadienlatex (Latex A) mit einem $d_{50}$-Wert von 277 nm, einem $d_{90}$-$d_{10}$-Wert von 44 nm und einem Gelgehalt von 58 Gew.-% und 50 Gew.-Teile (gerechnet als Feststoff) eines durch radikalische Polymerisation hergestellten anionisch emulgierten Polybutadienlatex (Latex B) mit einem $d_{50}$-Wert von 415 nm, einem $d_{90}$-$d_{10}$-Wert von 144 nm und einem Gelgehalt von 83 Gew.-% werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 42 Gew.-Teile eines Gemisches aus 73 Gew.-% Styrol und 27 Gew.-% Acrylnitril und 0,1 Gew.-Teile tert.-Dodecylmercaptan innerhalb von 4 Stunden gleichmäßig zudosiert; parallel dazu wird 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

35 Gew.-Teile dieses Pfropfpolymerisats werden mit 65 Gew.-Teilen eines Styrol/Acrylnitril-Copolymerharzes (72:28, $\overline{M}_w$ = 115 000, $\overline{M}_w/\overline{M}_n-1 \leq 2$), 2 Gew.-Teilen Ethylendiaminbisstearylamid, 0,1 Gew.-Teilen eines Silikonöls und 1,28 Gew.-Teilen einer Farbmischung (anthrazit) in einem Innenkneter vermischt und anschließend zu Prüfstäben und einer speziellen Platte mit Rippen (zur Beurteilung der Farbvertiefung) und einer ebenen Platte (zur Beurteilung des Oberflächenglanzes) verarbeitet.

Folgende Daten wurden ermittelt:
Kerbschlagzähigkeit bei Raumtemperatur ($a_k^{RT}$) und bei -40°C ($a_k^{-40°C}$) nach ISO 180/1A (Einheit: kJ/m$^2$), Kugeldruckhärte ($H_c$) nach DIN 53 456 (Einheit: N/mm$^2$), Wärmeformbeständigkeit (Vicat B) nach DIN 53 460 (Einheit: °C), Oberflächenglanz nach DIN 67 530 bei einem Reflektionswinkel von 20° (Reflektometerwert), Fließfähigkeit MVI nach DIN 53 735U (Einheit: $cm^3$/10 min); die Beurteilung der Farbvertiefung erfolgte visuell nach folgender Abstufung:

1 = sehr schwach bis nicht erkennbar
2 = schwach
3 = mittel
4 = stark
5 = sehr stark

Die Ergebnisse sind in Tabelle 1 zusammengestellt.

**Beispiel 2**

14,5 Gew.-Teile (gerechnet als Feststoff) des in Beispiel 1 eingesetzten Latex A und 43,5 Gew.-Teile (gerechnet als Feststoff) des in Beispiel 1 eingesetzten Latex B werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 42 Gew.-Teile eines Gemisches aus 73 Gew.-% Styrol und 27 Gew.-% Acrylnitril und 0,1 Gew.-Teile tert.-Dodecylmercaptan innerhalb 4 Stunden derart zugegeben, daß innerhalb der ersten 2 Stunden 70 Gew.-% der Gesamtmonomerenmenge zum Reaktionsgemisch zudosiert werden, parallel dazu wird 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

Die Ausprüfung erfolgte nach Abmischung mit Styrol/Acrylnitril-Copolymerharz und Additiven analog Beispiel 1.

**Beispiel 3**

29 Gew.-Teile (gerechnet als Feststoff) eines durch radikalische Polymerisation hergestellten anionisch emulgierten Polybutadienlatex mit einem $d_{50}$-Wert von 282 nm, einem $d_{90}$-$d_{10}$-Wert von 48 nm und einem Gelgehalt von 49 Gew.-% und 29 Gew.-Teile (gerechnet als Feststoff) eines durch radikalische Polymerisation hergestellten anionisch emulgierten Polybutadienlatex mit einem $d_{50}$-Wert von 432 nm, einem $d_{90}$-$d_{10}$-Wert von 128 nm und einem Gelgehalt von 81 Gew.-% werden mit Wasser auf einen Feststoffgehalt von ca. 20 Gew.-% gebracht, wonach auf 63°C erwärmt und mit 0,5 Gew.-Teilen Kaliumperoxodisulfat (gelöst in Wasser) versetzt wird. Danach werden 42 Gew.-Teile eines Gemisches aus 73 Gew.-% Styrol und 27 Gew.-% Acrylnitril und 0,1 Gew.-Teile tert.-Dodecylmercaptan innerhalb 4 Stunden derart zugegeben, daß innerhalb der ersten 2 Stunden 70 Gew.-% der Gesamtmonomerenmenge zum Reaktionsgemisch zudosiert werden, parallel dazu wird 1 Gew.-Teil (gerechnet als Festsubstanz) des Natriumsalzes eines Harzsäuregemisches (Dresinate 731, gelöst in alkalisch eingestelltem Wasser) über 4 Stunden zudosiert. Nach einer 4-stündigen Nachreaktionszeit wird der Pfropflatex nach Zugabe von ca. 1,0 Gew.-Teilen eines phenolischen Antioxidans mit einem Magnesiumsulfat/Essigsäure-Gemisch koaguliert und nach dem Waschen mit Wasser das resultierende Pulver bei 70°C im Vakuum getrocknet.

Die Ausprüfung erfolgte nach Abmischung mit Styrol/Acrylnitril-Copolymerharz und Additiven analog Beispiel 1.

**Beispiel 4** (Vergleich)

Beispiel 2 wird wiederholt, wobei anstelle des Polybutadienlatexgemisches 58 Gew.-Teile Latex A eingesetzt werden; die sonstigen Reaktionsbedingungen sowie Aufarbeitung und Abmischung mit Styrol/Acrylnitril-Copolymerharz und Additiven bleiben unverändert.

**Beispiel 5** (Vergleich)

Beispiel 2 wird wiederholt, wobei anstelle des Polybutadienlatexgemisches 58 Gew.-Teile Latex B eingesetzt werden; die sonstigen Reaktionsbedingungen sowie Aufarbeitung und Abmischung mit Styrol/Acrylnitril-Copolymerharz und Additiven bleiben unverändert.

Aus den in Tabelle 1 zusammengestellten Prüfwerten ist ersichtlich, daß nur die erfindungsgemäßen Formmassen eine Kombination aus hoher Zähigkeit, gutem Oberflächenglanz und nur sehr schwach ausgeprägter Farbvertiefung aufweisen.

Dabei ist wichtig, daß die Werte für die sonstigen technologisch wichtigen ABS-Eigenschaften wie Härte, Wärmeformbeständigkeit und insbesondere thermoplastische Fließfähigkeit als Maß für die Verarbeitbarkeit nicht negativ beeinflußt werden.

Tabelle 1

| Prüfdaten der untersuchten Formmassen | | | | | | | |
|---|---|---|---|---|---|---|---|
| Beispiel | $a_k$RT ($kJ/m^2$) | $a_k^{-40°C}$ ($kJ/m^2$) | Hc ($N/mm^2$) | Vicat B (°C) | MVI ($cm^3$/10min) | Glanz grad | Farbvertiefung |
| 1 | 32 | 13 | 90 | 100 | 9,3 | 89 | 1 |
| 2 | 29 | 11 | 91 | 101 | 9,1 | 90 | 1 |
| 3 | 34 | 16 | 90 | 100 | 8,9 | 91 | 2 |
| 4 (Vergleich) | 21 | 16 | 90 | 100 | 9,3 | 92 | 5 |
| 5 (Vergleich) | 27 | 9 | 92 | 101 | 9,3 | 84 | 2 |

## Patentansprüche

1. Thermoplastische Formmassen vom ABS-Typ enthaltend

   I) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines weiteren Vinylmonomeren copolymerisiert enthalten und wobei das Massenverhältnis von eingesetzten Monomeren zu eingesetzten Butadienpolymerisaten 25:75 bis 70:30 beträgt und

   II) mindestens einem Copolymerisat aus Styrol und Acrylnitril im Gewichtsverhältnis 90:10 bis 50:50, wobei Styrol und/oder Acrylnitril ganz oder teilweise durch $\alpha$-Methylstyrol, Methylmethacrylat oder N-Phenylmaleinimid ersetzt werden kann, dadurch gekennzeichnet, daß der Butadienpolymerisatlatex (A) einen Teilchendurchmesser $d_{50} \leq 320$ nm, eine Breite der Teilchengrößenverteilung (gemessen als $d_{90}$-$d_{10}$ aus der integralen Teilchengrößenverteilung) von 30 bis 100 nm und einen Gelgehalt $\leq 70$ Gew.-% besitzt und der Butadienpolymerisatlatex (B) einen Teilchendurchmesser $d_{50} \geq 370$ nm, eine Breite der Teilchengrößenverteilung (gemessen als $d_{90}$-$d_{10}$ aus der integralen Teilchengrößenverteilung) von 50 bis 500 nm und einen Gelgehalt $\geq 70$ Gew.-% besitzt.

2. Thermoplastische Formmassen vom ABS-Typ gemäß Anspruch 1, zusätzlich dadurch gekennzeichnet, daß die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 55 bis 90 Gew.-% der Monomeren zudosiert werden.

3. Thermoplastische Formmassen vom ABS-Typ enthaltend

   I) mindestens einem Pfropfpolymerisat, welches erhältlich ist durch Emulsionspolymerisation von Styrol und Acrylnitril im Gewichtsverhältnis 90:10 bis 50:50, wobei Styrol und/oder Acrylnitril ganz oder teilweise ersetzt werden kann durch $\alpha$-Methylstyrol, Methylmethacrylat oder N-Phenylmaleinimid, in Gegenwart von mindestens zwei Butadienpolymerisatlatices vom Typ (A) und (B), welche jeweils 0 bis 50 Gew.-% eines -weiteren Vinylmonomeren copolymerisiert enthalten und wobei das Massenverhältnis von eingesetzten Monomeren zu eingesetzten Butadienpolymerisaten 25:75 bis 70:30 beträgt und

   II) mindestens einem Copolymerisat aus Styrol und Acrylnitril im Gewichtsverhältnis 90:10 bis 50:50, wobei Styrol und/oder Acrylnitril ganz oder teilweise durch $\alpha$-Methylstyrol, Methylmethacrylat oder N-Phenylmaleinimid ersetzt werden kann, dadurch gekennzeichnet, daß der Butadienpolymerisatlatex (A) einen Teilchendurchmesser $d_{50}$ von 260 bis 310 nm, eine Breite der Teilchengrößenverteilung (gemessen als $d_{90}$-$d_{10}$ aus der integralen Teilchengrößenverteilung) von 40 bis 80 nm und einen Gelgehalt von 40 bis 65 Gew.-% besitzt und

der Butadienpolymerisatlatex (B) einen Teilchendurchmesser $d_{50}$ von 380 bis 450 nm, eine Breite der Teilchengrößenverteilung (gemessen als $d_{90}$-$d_{10}$ aus der integralen Teilchengrößenverteilung) von 100 bis 400 nm und einen Gelgehalt von 75 bis 90 Gew.-% besitzt.

4. Thermoplastische Formmassen vom ABS-Typ gemäß Anspruch 3, zusätzlich dadurch gekennzeichnet, daß die Pfropfpolymerisation durch Monomerenzulauf zum Gemisch der Butadienpolymerisatlatices (A) und (B) in der Weise erfolgt, daß innerhalb der ersten Hälfte der Monomerenzulaufzeit 60 bis 80 Gew.-% der Monomeren zudosiert werden.

5. Thermoplastische Formmassen vom ABS-Typ gemäß Ansprüchen 1 bis 4, dadurch gekennzeichnet, daß zusätzlich mindestens ein Harz ausgewählt aus aromatischem Polycarbonat, aromatischem Polyestercarbonat, Polyester, Polyamid enthalten ist.

6. Verwendung der thermoplastischen Formmassen gemäß Ansprüchen 1 bis 5 zur Herstellung von Formteilen.

## Claims

1. Thermoplastic moulding compositions of the ABS type containing

I) at least one graft copolymer which is obtainable by emulsion polymerization of styrene and acrylonitrile in the weight ratio 90:10 to 50:50, wherein styrene and/or acrylonitrile can be completely or partly replaced by $\alpha$-methylstyrene, methyl methacrylate or N-phenylmaleimide, in the presence of at least two butadiene polymer latices of types (A) and (B), which each contain, copolymerized, 0 to 50 wt.% of a further vinyl monomer, and wherein the weight ratio of monomers used to butadiene polymers used is 25:75 to 70:30, and

II) at least one copolymer of styrene and acrylonitrile in the weight ratio 90:10 to 50:50, wherein the styrene and/or acrylonitrile can be completely or partly replaced by $\alpha$-methylstyrene, methyl methacrylate or N-phenylmaleimide, characterized in that the butadiene polymer latex (A) has a particle diameter $d_{50} \leq 320$ nm, a width of the particle size distribution (measured as $d_{90}$-$d_{10}$ from the integral particle size distribution) of 30 to 100 nm, and a gel content $\leq 70$ wt.% and the butadiene polymer latex (B) has a particle diameter $d_{50} \geq 370$ nm, a width of the particle size distribution (measured as $d_{90}$-$d_{10}$ from the integral particle size distribution) of 50 to 500 nm and a gel content $\geq 70$ wt.%.

2. Thermoplastic moulding compositions of the ABS type according to Claim 1, additionally characterized in that the graft polymerization is carried out by monomer feed to the mixture of the butadiene polymer latices (A) and (B) in such a way that within the first half of the monomer feed time 55 to 90 wt.% of the monomers are charged.

3. Thermoplastic moulding compositions of the ABS type containing

I) at least one graft copolymer which is obtainable by emulsion polymerization of styrene and acrylonitrile in the weight ratio 90:10 to 50:50, wherein styrene and/or acrylonitrile can be completely or partly replaced by $\alpha$-methylstyrene, methyl methacrylate or N-phenylmaleimide, in the presence of at least two butadiene polymer latices of types (A) and (B), which each contain, copolymerized, 0 to 50 wt.% of a further vinyl monomer, and wherein the weight ratio of monomers used to butadiene polymers used is 25:75 to 70:30, and

II) at least one copolymer of styrene and acrylonitrile in the weight ratio 90:10 to 50:50, wherein the styrene and/or acrylonitrile can be completely or partly replaced by $\alpha$-methylstyrene, methyl methacrylate or N-phenylmaleimide, characterized in that the butadiene polymer latex (A) has a particle diameter $d_{50}$ of 260 to 310 nm, a width of the particle size distribution (measured as $d_{90}$-$d_{10}$ from the integral particle size distribution) of 40 to 80 nm, and a gel content of 40 to 65 wt.% and the butadiene polymer latex (B) has a particle diameter of 380 to 450 nm, a width of the particle size distribution (measured as $d_{90}$-$d_{10}$ from the integral particle size distribution) of 100 to 400 nm, and a gel content of 75 to 90 wt.%.

4. Thermoplastic moulding compositions of the ABS type according to Claim 3, additionally characterized in that the graft polymerization is carried out by monomer feed to the mixture of the butadiene polymer latices (A) and (B) in such a way that within the first half of the monomer feed time 60 to 80 wt.% of the monomers are charged.

5. Thermoplastic moulding compositions of the ABS type according to Claims 1 to 4, characterized in that in addition

they contain at least one resin selected from aromatic polycarbonate, aromatic polyester carbonate, polyester and polyamide.

6. Use of the thermoplastic moulding compositions according to Claims 1 to 5 for the production of moulded parts.

## Revendications

1. Matières à mouler thermoplastiques de type ABS contenant

I) au moins un polymère greffé que l'on obtient par polymérisation en émulsion de styrène et d'acrylonitrile dans le rapport pondéral de 90:10 à 50:50, dans lequel le styrène et/ou l'acrylonitrile peuvent être remplacés, en tout ou en partie, par de l'α-méthylstyrène, par du méthacrylate de méthyle ou par du N-phénylmaléimide, en présence d'au moins deux latex de polymères de butadiène de types (A) et (B) qui contiennent respectivement, à concurrence de 0 à 50% en poids, un monomère vinylique supplémentaire à l'état copolymérisé et dans lequel le rapport massique des monomères mis en oeuvre aux polymères de butadiène mis en oeuvre s'élève de 25:75 à 70:30, et

II) au moins un copolymère de styrène et d'acrylonitrile dans le rapport pondéral de 90:10 à 50:50, dans lequel le styrène et/ou l'acrylonitrile peuvent être remplacés, en tout ou en partie, par de l'α-méthylstyrène, par du méthacrylate de méthyle ou par du N-phénylmaléimide, caractérisées en ce que le latex de polymère de butadiène (A) possède un diamètre de particules $d_{50} \leq 320$ nm, une étendue de la distribution granulométrique (mesurée comme $d_{90}$-$d_{10}$ à partir de la distribution granulométrique intégrale) de 30 à 100 nm et une teneur en gel ≤ 70% en poids, et le latex de polymère de butadiène (B) possède un diamètre de particules $d_{50} \geq 370$ nm, une étendue de la distribution granulométrique (mesurée comme $d_{90}$-$d_{10}$ à partir de la distribution granulométrique intégrale) de 50 à 500 nm et une teneur en gel ≥ 70% en poids.

2. Matières à mouler thermoplastiques de type ABS selon la revendication 1, caractérisées en outre en ce que la polymérisation par greffage a lieu par introduction des monomères dans le mélange des latex de polymères de butadiène (A) et (B) de telle sorte qu'au cours de la première moitié du temps d'introduction des monomères, on ajoute de manière dosée les monomères à concurrence de 55 à 90% en poids.

3. Matières à mouler thermoplastiques de type ABS contenant

I) au moins un polymère greffé que l'on obtient par polymérisation en émulsion de styrène et d'acrylonitrile dans le rapport pondéral de 90:10 à 50:50, dans lequel le styrène et/ou l'acrylonitrile peuvent être remplacés, en tout ou en partie, par de l'α-méthylstyrène, par du méthacrylate de méthyle ou par du N-phénylmaléimide, en présence d'au moins deux latex de polymères de butadiène de types (A) et (B) qui contiennent respectivement, à concurrence de 0 à 50% en poids, un monomère vinylique supplémentaire à l'état copolymérisé et dans lequel le rapport massique des monomères mis en oeuvre aux polymères de butadiène mis en oeuvre s'élève de 25:75 à 70:30, et

II) au moins un copolymère de styrène et d'acrylonitrile dans le rapport pondéral de 90:10 à 50:50, dans lequel le styrène et/ou l'acrylonitrile peuvent être remplacés, en tout ou en partie, par de l'α-méthylstyrène, par du méthacrylate de méthyle ou par du N-phénylmaléimide, caractérisées en ce que le latex de polymère de butadiène (A) possède un diamètre de particules $d_{50}$ de 260 à 310 nm, une étendue de la distribution granulométrique (mesurée comme $d_{90}$-$d_{10}$ à partir de la distribution granulométrique intégrale) de 40 à 80 nm et une teneur en gel de 40 à 65% en poids, et le latex de polymère de butadiène (B) possède un diamètre de particules $d_{50}$ de 380 à 450 nm, une étendue de la distribution granulométrique (mesurée comme $d_{90}$-$d_{10}$ à partir de la distribution granulométrique intégrale) de 100 à 400 nm et une teneur en gel de 75 à 90% en poids.

4. Matières à mouler thermoplastiques de type ABS selon la revendication 3, caractérisées en outre en ce que la polymérisation par greffage a lieu par introduction des monomères dans le mélange des latex de polymères de butadiène (A) et (B) de telle sorte qu'au cours de la première moitié du temps d'introduction des monomères, on ajoute les monomères de manière dosée à concurrence de 60 à 80% en poids.

5. Matières à mouler thermoplastiques de type ABS selon les revendications 1 à 4, caractérisées en ce qu'elles contiennent en outre au moins une résine choisie parmi le groupe comprenant un polycarbonate aromatique, un polyestercarbonate aromatique, un polyester, un polyamide.

6. Utilisation des matières à mouler thermoplastiques selon les revendications 1 à 5 pour la fabrication d'éléments moulés.